# EUROPEAN PATENT APPLICATION

(11) **EP 1 271 402 A2**
(43) Date of publication of application: **02.01.2003**
(21) Application number: 02004008.5
(22) Date of filing: 22.02.2002
(51) Int. Cl.: G06T 3/40

(54) **Information terminal device**

(30) Priority: 09.03.2001 JP 2001066739
(71) Applicant: Sharp Kabushiki Kaisha, Osaka (JP)
(72) Inventor: Kinoshita, Shinichiro, Higashihiroshima-shi, Hiroshima (JP)
(74) Representative: Müller - Hoffmann & Partner

(57) **Abstract**

An information terminal device is capable of determining the maximal size of data within a specified data amount from a storing format of an original image, the number of used colors and dimensions of the original image (3) and enlarging or contracting the image (3) within the determined data amount, or determining a maximal size of a cursor within the specified data amount cutting the enclosed portion of the original image by moving the cursor (2) to a desired position to change the image. It is also capable of deforming the image portion enclosed by the cursor (2) into any desired shape within the specified data amount. If the image portion to be cutout by the cursor is smaller in its data amount than the specified value, it can enlarge the cutout image to the maximal size within the specified data amount.

## Description

### BACKGROUND OF THE INVENTION

The present invention relates to an information terminal device and, more specifically, to an information terminal device provided with an automatic image changing function for changing an image to an image having a data amount equal to or less than a desired amount when transmitting the image data to another information terminal device or storing the image data received and displayed or an information terminal device into a memory or a storage medium.

According to a prior art, it is possible to enlarge/contract an image to a size suitable for displaying it on a display screen of an information terminal device as well as to cut a portion of an image and display it on a display screen of the information terminal device.

The cut portion of the image can also be moved to any desired position on the display screen. And then, any portion needed of an image can be cut and displayed on the display screen of the information terminal device.

The prior art could not previously know in practice a data amount of a cutout portion of an image or an image changed in size.

However, when transmitting image data to an information terminal device such as a pocket telephone with a limited amount of data to be transmitted or storing image data on a storage medium with a limited capacity, it is rather rational to first determine a data amount and then change the size of an image to be transmitted or stored.

### SUMMARY OF THE INVENTION

An object of the present invention is to provide an information terminal device provided with a function for changing an image into an image having a data amount equal to or less than a desired amount, which is capable of enlarging/contracting an image data in accord with a size of a display screen, cutting a portion of an image and transmitting or storing the cutout image data.

Another object of the present invention is to provide an information terminal device that is provided with a function for cutting an image displayed on a screen in accord with a predetermined data amount or a data amount optionally set by a user before transmitting visual information over wire- or wireless-communication line or storing the image on a storage medium such as a memory card and a function for enlarging or contracting a whole image being displayed on a display screen to an image having a data amount in accord with a predetermined data amount or a data amount optionally preset by a user. This information terminal device can therefore transmit or store an image containing a desired amount of data in accord with a specified upper limit of transmittal or storable data amount or a data amount optionally set by user the above-described enlarging/contracting or image-cutting functions when transmitting or storing an image data to other information terminal device having a limited capacity of receiving or storing in a storage medium having a limited storage capacity.

Another object of the present invention is to provide an information terminal device that can further transmit an original image exceeding an upper limit of transmittable data amount by dividing an original image into a plurality of images having a data amount not more than the upper limit and transmitting them in succession and can also receive in turn the divided images and restore the original image.

Another object of the present invention is to provide an information terminal device that can present a cursor matching a preset data amount on an image being displayed on a display screen when cutting an image, and enabling a user to move the cursor to any desirable position on the image and transmit or store an image portion enclosed by the cursor.

Another object of the present invention is to provide an information terminal device that is capable of changing a shape of cursor into a desirable shape not exceeding a preset data amount, allowing a user to select whether the cursor shape is changed not to exceed or exceed the preset data amount.

A further object of the present invention is to provide an information terminal device that is capable of enlarging or contracting a cutout image portion to a preset data amount when the data amount of the cutout image portion differs from the preset data amount.

A still further object of the present invention is to provide an information terminal device that is capable of discriminating that the data amount of a cutout image portion (enclosed by a cursor) is different from the preset data amount and informing a user of that fact by changing for example the color of the cursor.

### BRIEF DESCRIPTION OF THE DRAWINGS

Figure 1 is a conceptual illustration for explaining an automatic image changing function of an information terminal device according to the present invention.

Figure 2 is a flowchart depicting a procedure for determining the shape of a cursor on a display device of an information terminal device according to the present invention.

Figure 3 is a flowchart depicting an exemplary procedure for transmitting image data having a data amount exceeding the upper transmittal limit by an information terminal device according to the present invention.

Figure 4 shows the correct alignment of the drawing sheets for Figures 4A and 4B.

Figures 4A and 4B are flowcharts depicting an exemplary procedure for changing image data on an information terminal device according to the present invention.

### PREFERRED EMBODIMENT OF THE INVENTION

A preferred embodiment of the present invention will be described bellow with reference to the accompanying drawings.

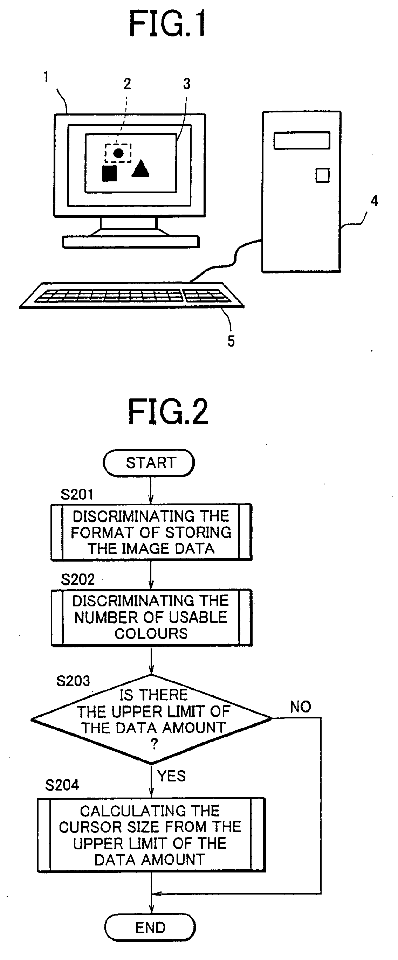

Figure 1 is a conceptual illustration for explaining an automatic image changing function of an information terminal device according to the present invention.

The shown information terminal device comprises a display device 1, an information terminal device body 4 such as a computer and an input device 5 such as a keyboard. An original image 3 is now displayed on a screen of the display device 1.

On the image 3, there is shown a cursor 2 that can be changed into any desired shape and moved to any desired position thereon by the user.

Figure 2 is a flowchart depicting a procedure for determining the shape of a cursor on a display device of an information terminal device according to the present invention.

Referring to Fig. 2, the operation of the information terminal device according to the present invention will be described as follows:

The data amount of an image is decided based on the number of usable colors, the format storage of a data and the image size.

The computer 4 of the information terminal device discriminates first the format of storing the image data (Step S201) and then the number of usable colors (Step S202).

The computer discriminates whether the upper limit of the image data amount has been preset (Step S203). If the upper limit has been preset, the computer calculates a necessary size of the cursor to be presented on the image (Step S204).

Thus, the size of the cursor 2 is decided in comparison with the number of usable colors and the storage format of the image 3 and the predetermined data amount or the data amount optionally set by the user.

When changing the shape of the cursor 2, the computer calculates the cursor shape according to the flowchart of Fig. 2.

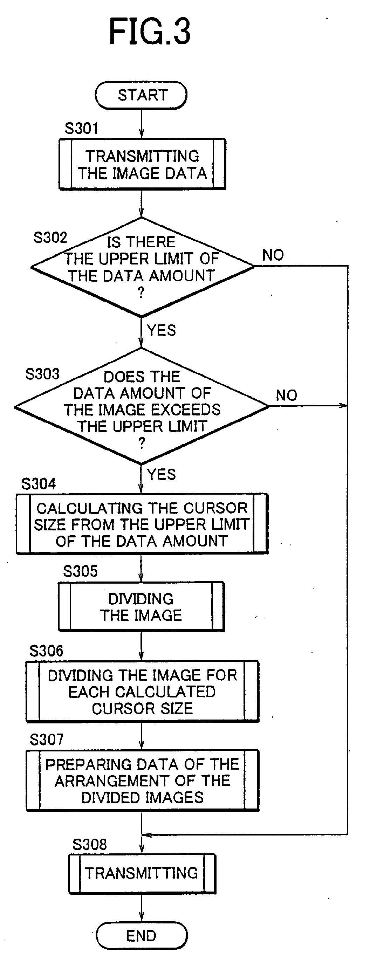

Figure 3 is a flowchart depicting an exemplary procedure for transmitting image data having a data amount exceeding the upper transmittal limit by an information terminal device according to the present invention.

When transmitting the image data (Step S301), the computer 4 of the information terminal device discriminates in advance whether the upper limit of transmittable image data is preset (Step S302).

If no upper limit is preset, then the image data is transmitted as it is (Step S308).

If the upper limit is preset, then the computer discriminates whether the amount of the transmittable image data exceeds the upper limit (Step S303). If the data amount does not exceed the upper limit, the image data is then transmitted as it is (Step S308).

If the data amount exceeds the upper limit, the computer calculates the cursor size corresponding to the upper limit of data amount (Step S304).

Then, the process proceeds to Step S305, wherein the computer divides the image into a plurality of images each having a data amount smaller than the upper limit value using the determined cursor size (Step S306) and prepares data for identifying the arrangement of the divided images (Step S307). The divided images with the information of arrangement of the divided images are then transmitted (Step S308).

In case of receipt of data of the divided image data, the information terminal device can restore the original image based on the data of arrangement.

The information terminal device allows the user to select the condition of deforming the image portion enclosed by the cursor 2, i.e., the data amount of that portion may be deformed on the condition not to exceed or to exceed the upper limit of transmittable data amount. Once the user selected the condition of deformation of the image portion not to exceed the upper limit, the portion cannot be enlarged more than the cursor size determined in the flowchart of Fig. 2.

On the other hand, when user selected the condition of deforming the image portion over the upper limit of the transmittable data amount, the information terminal device may inform the user, for example by changing the color of the cursor 2, that the data amount of the image portion enclosed by the cursor 2 exceeds the upper limit of the transmittable data amount.

When the data amount of the cutout image portion enclosed by the cursor 2 exceeds the upper limit of data amount, it may also be contracted without changing the aspect ratio or compressed by reducing the number of usable colors to be smaller than the upper limit.

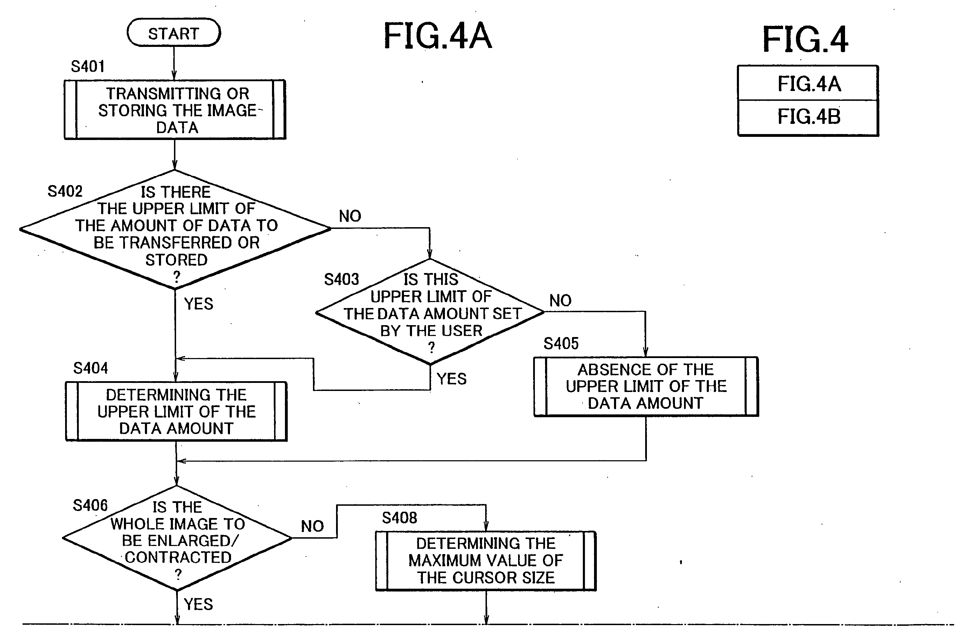

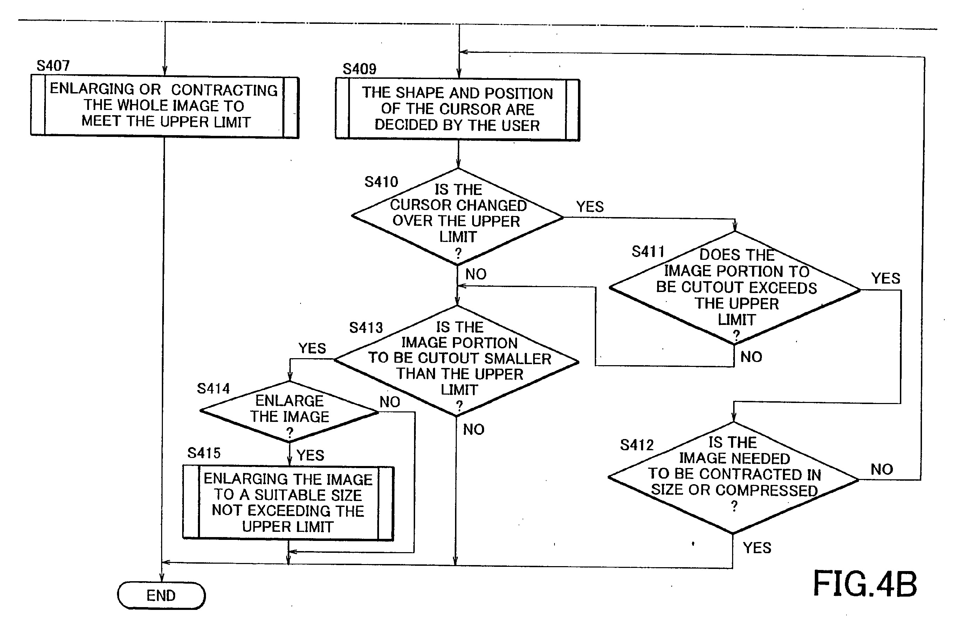

Figure 4 is a flowchart depicting an exemplary procedure for changing image data on an information terminal device according to the present invention.

When transmitting or storing the image data (Step S401), the computer discriminates in advance whether the upper limit of transmittable or storable data amount is preset or not (Step S402).

In the presence of the preset upper limit, the computer determines the upper limit as the preset value. In absence of the preset value, the computer discriminates whether the user sets an upper limit (Step S403). If the user sets the upper limit, then the computer determines the limit as the value set by the user (Step S404). Then, the computer discriminates whether a whole image is to be enlarged or contracted (Step S406).

In Step S403, if the user did not set the upper limit, the computer determines there is no upper limit (Step S405) and discriminates whether the whole image is to be enlarged or contracted (Step S406).

On the basis of discrimination in Step S406, in case when a whole image is enlarged or contracted, the computer enlarges or contracts the image in accord with the determined upper limit value (Step S407) and transmits or stores the enlarged or contracted image to end the procedure.

In case when a whole image is not enlarged or contracted, the computer determines the maximum value of a cursor size corresponding to the upper limit of the data amount (Step S408) and the user decides the shape and position of the cursor (Step S409).

In Step S410, the computer discriminates whether the cursor is to be changed in size to exceed the upper limit of the data amount, which has been determined in Step S404. In case of changing the cursor over the upper limit, the computer examines whether the image portion to be cutout exceeds the upper limit (Step S411). If it exceeds the upper limit, the computer further examines whether the image is contracted in size or compressed for example by reducing the number of the used colors (Step S412).

If the image is not contracted or compressed in Step S412, the computer returns to Step S409 to re-select the location of a portion to be cutout from the image.

In case of contracting or compressing the image, the computer performs the contraction or compression of the image and transmits or stores it to end the procedure.

In case if the cursor size is not changed over the upper limit (in Step S410) and the image portion to be cutout does not exceed the upper limit (in Step S411), the computer proceeds to Step S413 to examine whether the image portion is not reach the upper limit.

If the portion is smaller than the upper limit, the computer discriminates whether the image shall be enlarged (Step S414). If the image shall be enlarged, the computer enlarges the image to a suitable size not exceeding the upper limit (Step S415). If the image shall not be enlarged, the computer transmits or stores the image data as it is, ending the procedure.

If the image portion to be cutout reaches in size the upper limit (in Step S413), the computer directly transmits or stores it and ends the procedure.

As described above, if there is no upper limit of the transmittable or storable data amount, the user can set the upper limit and select whether a whole image is enlarged or contracted in size to meet the upper limit.

It is also possible for the user to cut any portion from an image if the enlargement or contraction of the image was requested.

In case if the cutout image portion exceeds in size the upper limit of the transmittable or storable data amount, the user can also select the whether the image is contracted in size or compressed for example by reducing the number of the used colors.

The user can further reselect the location of a portion to be cut from the image, if contraction or compression of the image portion was requested.

On the contrary, with the cutout image portion smaller than the upper limit of the data amount, the user can select whether the image shall be enlarged in size or not before transmitting or storing the image portion data.

The advantages of the present invention are as follows.

As apparent from the foregoing, an information terminal device according to the present invention enables a user to easily change an image being displayed on a display screen to an image containing a specified or desired amount of data before transmitting the image data to another information terminal having a limited receiving/transmit capacity or storing it in a storage medium having a limited storing capacity.

## Claims

1. A information terminal device provided with a means for cutting an image into a size corresponding to a predetermined data amount or any data amount optionally preset by a user when transmitting an image data over wire- or wireless-line or storing the image data on a storage medium such as memory card and a means for enlarging or contracting whole image being displayed on a display screen to a size corresponding to a predetermined data amount or any desirable data amount optionally determined by a user.

2. An information terminal device as defined in claim 1, **characterized in that** it is provided with a means for dividing an image into portions each corresponding to the predetermined data amount or the data amount optionally preset by a user and transmitting the divided image on a portion-by-portion basis and a means for receiving the portions of image data and restoring an original image from the received image data.

3. An information terminal device as defined in claim 1, **characterized in that** it is provided with a means for changing the cutting-out position of an image to any desirable position thereon.

4. An information terminal device as defined in claim 3, **characterized in that** it is provided with a means for changing the cutting-out shape of an image to any desired shape within the predetermined data amount or the data amount preset by a user and a means for selecting which condition of changing the cutout shape of an image not to exceed or to exceed the predetermined data amount or the data amount preset by a user.

5. An information terminal device as defined in claim 4, **characterized in that** it is provided with a means for enlarging or contracting or compressing the cutout image having a different data size so as to match the predetermined data amount or the data amount optionally preset by a user.

6. An information terminal device as defined in claim 4, **characterized in that** it is provided with a means for informing a user that a data amount of an image to be cut out is different from the predetermined data amount or the data amount optionally preset by the user.
